# EUROPÄISCHE PATENTSCHRIFT

(11) **EP 0 438 611 B1**
(45) Veröffentlichungstag und Bekanntmachung des Hinweises auf die Patenterteilung: **29.12.1993**
(21) Anmeldenummer: 90101165.0
(22) Anmeldetag: 20.01.1990
(51) Int. Cl.: A01D 34/73, F16B 21/16, E05C 1/04, G05G 5/06

(54) **Drehsicherung für ein drehbar gelagertes Teil, vorzugsweise für ein Schneidwerkzeug eines Arbeitsgerätes, insbesondere eines Freischneidegerätes**
Rotation-preventing locking device for a rotating component, especially for a cutting tool
Dispositif d'immobilisation en rotation pour un organe rotatif, notamment pour un outil de coupe

(43) Veröffentlichungstag der Anmeldung: 31.07.1991
(73) Patentinhaber: Dolmar GmbH, 22045 Hamburg (DE)
(72) Erfinder: Kloft, Manfred, D-2072 Bargteheide (DE)
(74) Vertreter: Richter, Werdermann & Gerbaulet

(56) Entgegenhaltungen:
- DE-A- 3 447 154
- GB-A- 573 414
- GB-A- 1 228 044
- US-A- 3 309 484
- US-A- 4 179 143
- US-A- 4 185 935

## Beschreibung

Die Erfindung betrifft eine Drehsicherung eines drehbar gelagerten Teiles, nämlich eines Schneidwerkzeuges eines Arbeitsgerätes, insbesondere eines Freischneidegerätes, mit mindestens einem dem drehbaren Teil zugeordneten Sicherungselement, das mit mindestens einem Blockierbolzen zusammenwirkt, wobei der Blockierbolzen am Arbeitsgerät angeordnet und aus einer das drehbar gelagerte Teil freigebenden Freigabestellung in eine das drehbar gelagerte Teil gegen eine Drehung um die Drehachse sperrende Sperrstellung verstellbar ist, und der federbelastete Blockierbolzen axial verschiebbar am Arbeitsgerät gelagert und in der Sperrstellung in eine Sperrbohrung eines Sicherungselementes eingreifend an einem Widerlager des Arbeitsgerätes abgestützt ist.

Bei einem Freischneidegerät sitzt das drehbare Schneid-Werkzeug form- oder kraftschlüssig auswechselbar auf einer Antriebswelle zwischen zwei Druckstucken, die auf der Welle gelagert und mit einer Mutter axial gesichert sind. Das obere Druckstück stützt sich an einem entsprechenden Gegenanschlag der Antriebswelle ab. Beispielsweise zum Nachschärfen oder zum Auswechseln muß das Schneidwerkzeug von der Antriebswelle abgenommen werden. Hierzu muß die Mutter gelöst werden, damit das untere Druckstück und das Schneidwerkzeug von der Welle abgenommen werden können. Die Antriebswelle muß dabei gegen Drehen gesichert werden. Das obere Druckstück ist mit einer Sperrbohrung versehen, in die ein von der Bedienungsperson mitgeführter Stift als Sperrteil gesteckt werden muß. Das Gehäuse des Freischneidegerätes ist mit einer Durchstecköffnung versehen, durch welche die Bedienungsperson diesen Stift stecken muß. Anschließend muß die festgezogene Mutter so Lange gedreht werden, bis die Sperrbohrung im oberen Druckstück in den Eingriffsbereich des Stiftes gelangt und in die die Sperrbohrung gesteckt werden kann. Da über die Druckstücke eine drehfeste Verbindung mit der Antriebswelle hergestellt ist, wird durch den eingesteckten Stift die Antriebswelle gegen Drehen gesichert, so daß nunmehr die Mutter bequem gelöst werden kann. Da der Stift von der Bedienungsperson stets mitgeführt werden muß, kommt es immer wieder vor, daß dieser Stift vergessen wird oder verloren geht, so daß im Bedarfsfall der Stift nicht zur Verfügung steht. Es bereitet dann erhebliche Schwierigkeiten, das Schneidwerkzeug von der Antriebswelle abzunehmen bzw. die Mutter zu lösen.

Es ist daher bereits vorgeschlagen worden, als Drehsicherung eines drehbar gelagerten Teiles eines Arbeitsgerätes ein diesem Teil zugeordnetes Sicherungselement vorzusehen, das mit einem Sperrteil zusammenwirkt. Das am Arbeitsgerät angeordnete Sperrteil ist dabei aus einer Freigabein eine Sperrstellung verstellbar, in welcher der Sperrteil am Arbeitsgerät abgestützt ist. Diese Ausführungsform einer Drehsicherung hat jedoch den Nachteil, daß sie nur mit Hilfe eines Werkzeugs bedienbar ist und somit eine einfache Auslösung der Drehsicherung nicht möglich ist. Außerdem ist bei dem bekannten Vorschlag die Konzeption recht aufwendig, und aufgrund der Vielzahl der ineinander bewegbaren und miteinander zusammenwirkenden Teile ist die Gefahr eines Ausfalls aufgrund eingetretener Verschmutzungen recht groß (DE-OS 34 47 154).

Es ist daher Aufgabe der vorliegenden Erfindung, eine Drehsicherung der eingangs genannten Art dahingehend weiterzubilden, daß diese ohne zur Hilfenahme eines Werkzeuges einfach bedient werden kann, d.h. in ihre Sperrstellung bzw. in ihre Freigabestellung gesetzt werden kann, wobei gleichzeitig ein möglichst einfacher Aufbau bei größter Betriebssicherheit erstrebt wird.

Diese Aufgabe wird durch die im Anspruch 1 gekennzeichneten Merkmale gelöst.

Bei dieser Ausbildung der Drehsicherung ist es möglich, die Drehsicherung zu entriegeln bzw. zu verriegeln, ohne daß ein Werkzeug zur Hilfe genommen werden muß. Es ist vielmehr so, daß durch das Eingreifen des Verriegelungsbolzens in die Einrastausnehmung des Blockierbolzens eine ganz einfache Art der Festhaltung des Blockierbolzens geschaffen worden ist. Durch das entsprechende Ausrasten des Verriegelungsbolzens aus der Ausrastausnehmung des Blockierbolzens kann dieser problemlos gelöst werden und damit das Schneidwerkzeug entsperrt werden. Die Ausbildung der Drehsicherung ist dabei äußerst einfach, da nur eine ganz geringe Anzahl von Einzelteilen notwendig ist, um diese allen Funktionswünschen gerecht werdende Drehsicherung zu konzipieren.

Erfindungsgemäß ist vorgesehen, daß die Einrastausnehmung als umlaufende und einen rechteckigen Querschnitt aufweisende Ringnut am Blockierbolzen ausgebildet ist und daß der Verriegelungsbolzen eine Umgreifeinziehung für ein einrastendes Umgreifen des Blockierbolzens aufweist, wobei die Umgreifeinziehung als tangentiale Einziehung mit zwei Bereichen mit jeweils einem teilzylindrischen Querschnitt ausgebildet ist, wobei der Durchmesser des einen Teilzylinders dem Durchmesser des Blockierbolzens und der Durchmesser des zweiten Teilzylinders dem Durchmesser des Blockierbolzens im Bereich der Ringnut entspricht. Durch diese Ausbildung der Einrastausnehmung bzw. der Umgreifeinziehung ist es möglich, durch Betätigung jeweils des einen Bolzens eine Bewegung in Längsrichtung des jeweils anderen Bolzens zu ermöglichen, so daß mit einer Bewegung ein Sperren bzw. Entsperren möglich wird. Durch die Verwendung von entsprechend angeordneten Federn ist es dabei möglich, ein federgesteuertes Verriegeln des Verriegelungsbolzens bzw. ein federgesteuertes Bewegen des Verriegelungsbolzens in seine Freigabestellung durchzuführen.

Durch eine geeignete farbliche Kennzeichnung des Betätigungskopfes des Blockierbolzens einerseits und des Betätigungskopfes des Verriegelungsbolzens andererseits ist es dabei noch möglich, mit einfachen Mitteln eine optische Anzeige für den jeweiligen Zustand (verriegelt/freigegeben) des Schneidwerkzeuges auch optisch anzuzeigen. Weiterhin ist bevorzugterweise vorgesehen, daß am Arbeitsgerät im Bereich der Durchgangsdurchbohrung und/oder im Bereich der Sacklochbohrung Gehäuserippen mit einer einem Bewegungsweg des Betätigungskopfes des Blokkierbolzens bzw. des Betätigungskopfes des Verriegelungsbolzens entsprechenden Höhe angeordnet sind. Durch diese Sicherungsrippen wird verhindert, daß eine versehentliche Betätigung entweder des Blockierbolzens oder des Verriegelungsbolzens beispielsweise beim Auf- oder Ablegen der Maschine oder beim Festhalten der Maschine im Rahmen irgendwelcher Bearbeitungsschritte möglich ist.

Weitere bevorzugte Ausführungsformen und Merkmale der Erfindungen sind in den Unteransprüchen, der Beschreibung und den Zeichnungen gekennzeichnet.

Nachstehend wird ein Ausführungsbeispiel anhand der Zeichnungen näher erläutert. Es zeigen
**Fig.** 1 rein schematisch in senkrecht geschnittener Darstellung einen Gehäuseabschnitt eines Arbeigsgerätes mit der erfindungsgemäßen Drehsicherung, deren Blockierbolzen sich in Freigabestellung befindet,
**Fig.** 2 die Drehsicherung gem. Fig. 1 in einer um 90° gedrehten Darstellung gem. Linie II-II in Fig. 1,
**Fig.** 3 die Drehsicherung gem. Fig. 1, wobei sich der Blockierbolzen in seiner Sperrstellung befindet, und
**Fig**. 4 die Drehsicherung gem. Fig. 3 in einer um 90° gedrehten Darstellung gem. Linie IV-IV in Fig. 3.

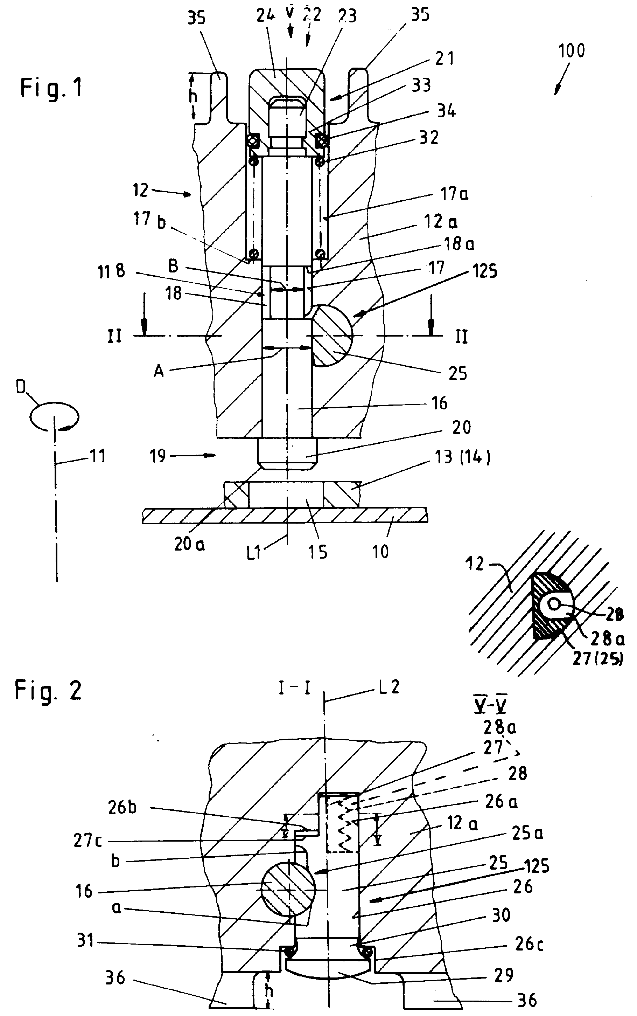

In Fig. 1 bis 4 ist eine Drehsicherung 100 dargestellt, die zur Sicherung eines (nur teilweise dargestellten) Schneidwerkzeuges 10 dient, das über eine in der Zeichnung nur angedeutete Antriebswelle 11, die in Richtung D bzw. in Gegenrichtung drehbar ist, angetrieben wird, wobei die Drehsicherung 100 in einem nur angedeuteten Gehäuse Abschnitt 12a eines Arbeitsgerätes 12, beispielsweise eines Freischneiders angeordnet ist.

Die Antriebswelle 11, deren Drehachse in der Zeichnung angedeutet ist, treibt das auf der Antriebswelle drehfest gelagerte Schneidwerkzeug 10 an. Auf dem Schneidwerkzeug 10 ist an einer geeigneten und entsprechenden Stelle ein Schneidwerkzeugauflageteil 13 als Sicherungselement 14 angeordnet. Das Schneidwerkzeugauflageteil 13 ist dabei mit einer Sackloch- oder Durchgangsbohrung 15 versehen, die sich, wenn notwendig, auch bis in das Schneidwerkzeug 10 hinein oder durch dieses hindurch erstrecken kann. In die Bohrung 15 greift der Blockierbolzen 16 ein, der in einer Durchgangsdurchbohrung im Gehäuseabschnitt 12a des Arbeitsgerätes 12 angeordnet ist. Die Durchgangsbohrung 17 weist dabei auf der von dem Schneidwerkzeug 10 abgewandten und zur Gehäuseaußenseite gerichteten Endabschnitt einen verbreiterten Eingangsabschnitt 17a auf. In diesem ist eine Feder 32 angeordnet, deren Funktion später noch erläutert wird.

Der Blockierbolzen 16 ist etwa in seiner Mitte mit einer Ringnut 18 als Einrastausnehmung 118 versehen, wobei sich aufgrund des etwa rechteckigen Querschnitts der Ringnut 18 Wellenabsätze 18a als Anschlagpunkte ergeben.

Das dem Schneidwerkzeug 10 zugewandte Ende 19 des Blockierbolzens 16 weist ein der Bohrung 15 entsprechendes und in diese einführbares Einsteckteil 20 auf, das nach Art einer Aufsteckhülse ausgebildet sein kann und bevorzugterweise an seiner der Bohrung 15 zugewandten Kante eine Fase 20a aufweist, um immer ein sicheres Hineingleiten des Einsteckteils 20 und damit des Blockierbolzens 16 in die Bohrung 15 des Schneidwerkzeugauflageteils 13 sicherzustellen. Das andere Ende 21 des Blockierbolzens 16 weist dabei einen Betätigungskopf 22 auf, der gegenüber dem Blockierbolzen einen größeren Außendurchmesser aufweist und auf das Wellenendstück 23 als Aufsteckteil 24 aufgesteckt ist. Bei der in Fig. 1 dargestellten Betriebsstellung ist der Betätigungskopf 22 nicht betätigt worden, so daß das Einsteckteil 20 sich nicht in der Sackloch- oder Durchgangsbohrung 15 befindet, so daß das Schneidwerkzeug 10 freigegeben ist.

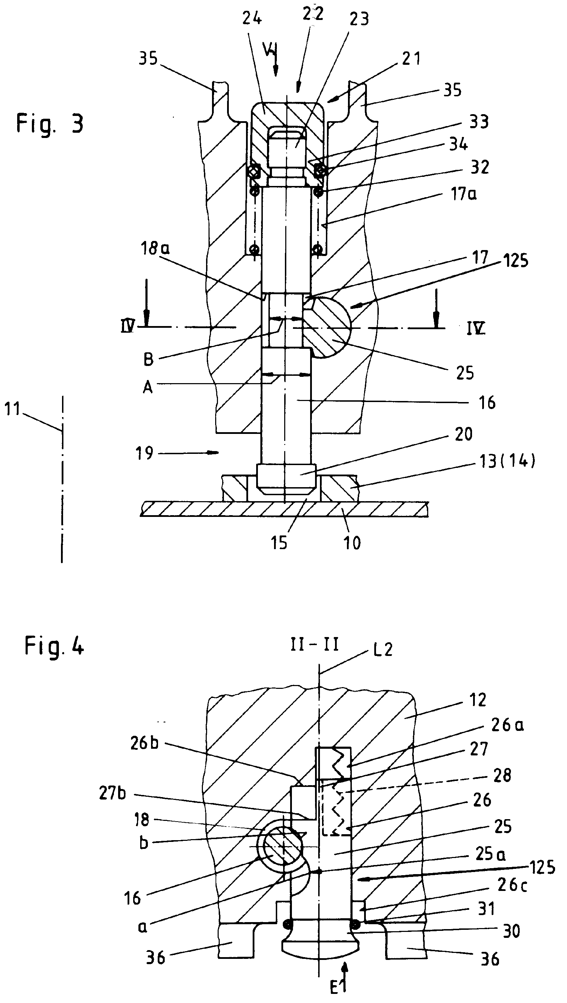

Zur Halterung des Blockierbolzens 16 in seiner in Fig. 3 dargestellten Sperrstellung ist ein in Fig. 2 dargestellter Verriegelungsbolzen 25 vorgesehen, wobei die Längsachse L1 des Blockierbolzens 16 und die Längsachse L2 des Verriegelungsbolzens 25 etwa einen Winkel von 90° zueinander aufweisen, wobei hier auch ein anderer Winkel möglich ist, sofern sich dies aus der Gesamtkonzeption des Arbeitsgerätes 12 als notwendig ergeben sollte.

Der Verriegelungsbolzen 25, der in einer Sacklochbohrung 26 im Gehäuseabschnitt 12a längsverschieblich angeordnet ist, weist etwa in seiner Mitte als Umgreifeinziehung 25a tangentiale Einziehungen auf, die jeweils einen teilzylindrischen Querschnitt aufweisen, wobei der Durchmesser a des einen Teilzylinders dem Durchmesser A des Blockierbolzens 16 außerhalb der Ringnut 18 und der Durchmesser b des zweiten Teilzylinders dem Durchmesser B des Blockierbolzens 16 im Bereich der Ringnut 18 entspricht. Diese Ausbildung der Umgreifeinziehung 25α führt im Zusammenwirken mit der als Einrastausnehmung 118 im Blockierbolzen 16 ausgebildeten Ringnut 18 dazu, daß der Blockierbolzen 16 bei der in Fig. 2 dargestellten Lage des Verriegelungsbolzens 25, bei der der Teilzylinder mit dem Durchmesser a den Verriegelungsbolzen 16 umgreift, frei in Richtung der Längsachse L1 in der Durchgangsdurchbohrung 17 bewegbar ist. Wenn nun der Blockierbolten 16 durch Betätigung des Betätigungskopfes 22 in die in Fig. 3 dargestellte Stellung verschoben wird, greift der zweite Bereich der Umgreifeinziehung 25a mit dem Durchmesser b in die Ringnut 18 ein und umfaßt den Blockierbolzen 16. Der Blockierbolzen 16 ist dann nur soweit verschiebbar, bis einer der durch die Ringnut 18 gebildeten Wellenabsätze 18a an den Verriegelungsbolzen 25 als Widerlager 125 anschlägt und durch diesen dann gestoppt und gehaltert wird.
Der Verriegelungsbolzen 25 ist dabei in der Sacklochbohrung 26 des Gehäuseabschnittes 12 a federbelastet angeordnet. Hierzu ist die Sacklochbohrung 26 mit einem einen verkleinerten Querschnitt aufweisenden Bohrungsendstück 26a versehen, wobei die Sacklochbohrung 26 in das Bohrungsendstück 26a unter Ausbildung eines Bohrungsabsatzes 26b übergeht. Im gehäuseaußenseitigen Bereich ist die Sacklochbohrung 26 mit einem verbreiterten Eingangsstück 26c versehen. Der Verriegelungsbolzen 25 weist einen zum Bohrungsendstück 26a entsprechend ausgebildeten verjüngten Schaftfortsatz 27 mit etwa halbkreisförmiger Querschnittsfläche auf, der jedoch das Bohrungsendstück 26a auch bei vollständig eingeschobenem Verriegelungsbolzen 25 nur teilweise ausfüllt. In den verbliebenen Freiraum ist eine Feder 28 so angeordnet, daß sich der Verriegelungsbolzen 25 gegenüber dem Gehäuseabschnitt 12 durch die Druckfeder 28 abstützt. Der Verriegelungsbolzen 25 ist dabei an seinem zur Gehäuseaußenseite gewandten Ende mit einem Betätigungskopf 29 versehen, wobei sich unterhalb des Betätigungskopfes 29 eine Ringnut 30 mit kreisförmigem Querschnitt befindet, in der den Verriegelungsbolzen 25 umgreifend ein O-Ring 31 als Dichtung angeordnet ist. Der O-Ring ist dabei so angeordnet, daß er im verbreiterten Eingangsabschnitt 26c der Sacklochbohrung 26 anliegend die Sacklochbohrung 26 gegen das Eindringen von Verschmutzungen schützt.

Die Feder 28 ist so vorgespannt, daß sie in der in Fig.2 dargestellten Lage den Verriegelungsbolzen 25 mit einer Vorspannkraft in Richtung der Längsachse L2 zur Gehäuseaußenseite hin gerichtet beaufschlagt. Wenn nun der Blockierbolzen 16 in die in Fig. 3 dargestellte Position verschoben wird, wird der Verriegelungsbolzen 25 freigegeben und kann mit dem Abschnitt b der Umgreifeinziehung 25a in die Ringnut 18 des Blockierbolzens 16 eingreifen, wie dies in Fig. 4 dargestellt ist. Die Feder 28 weist dabei jedoch immer noch eine Restvorspannkraft auf, so daß der Verriegelungsbolzen 25 immer sicher in der in Fig. 4 dargestellten Lage gehalten wird.

In dem verbreiterten Eingangsabschnitt 17a der Durchgangsbohrung 17 ist die Druckfeder 32 angeordnet, die sich zwischen dem verbreiterten Eingangsabschnitt 17a bzw. an dem durch diesen ausgebildeten Absatz 17b und dem Betätigungskopf 22 des Blockierbolzens 16 abstützt. Die Feder 32 ist dabei mit einer entsprechenden Vorspannkraft versehen, so daß sie den Blockierbolzen 16 immer sicher in der in Fig. 1 dargestellten Lage hält. Wenn nun eine Betätigung des Blockierbolzens 16 über dem Betätigungskopf 22 gegen die Wirkung der Feder 32 unter deren Zusammendrückung durchgeführt und das Einsteckteil 20 in die Sackloch- oder Durchgangsbohrung 15 des Schneidwerkzeugauflageteils 13 eingeführt wird, so rastet - wie oben beschrieben - der Verriegelungsbolzen 25 ein und hält den Blockierbolzen 16 in der in Fig. 3 dargestellten Lage. Der Blockierbolzen 16 befindet sich dann in seiner Sperrstellung und das Schneidwerkzeug 10 ist gegen eine Drehung um die Drehachse 11 gesperrt.

Wenn dann der Betätigungskopf 29 des Verriegelungsbolzens 25 betätigt und der Verriegelungsbolzen 25 in die Sacklochbohrung 26 hineingedrückt wird, wird der Bereich a der Umgreifeinziehung 25a in den Bereich des Blockierbolzens 16 gebracht. Da der Durchmesser der kreisförmigen Einziehung a dem Durchmesser des Verriegelungsbolzens 16 entspricht, kann dieser an der Einziehung a vorbeigleiten, und er wird unter Einwirkung der Federkraft der Feder 32 in die in Fig. 1 dargestellte Stellung des Blockierbolzens 16 verfahren. Damit wird gleichzeitig das Einsteckteil 20 aus der Bohrung 15 herausgezogen, so daß das Schneidwerkzeug 10 freigegeben wird. Die Drehsicherung 100 befindet sich dann in ihrer Freigabestellung.

Damit die voranstehend angesprochene Betätigung des Betätigungskopfes 22 des Blockierbolzens 16 einerseits und des Betätigungskopfes 29 des Verriegelungsbolzens 25 andererseits nicht aus Versehen erfolgen kann, ist der Gehäuseabschnitt 12a des Arbeitsgerätes 12 im Bereich der Durchgangsdurchbohrung 17 mit Gehäuserippen 35 und im Bereich der Sacklochbohrung 26 mit Gehäuserippen 36 versehen, wobei die jeweilige Höhe h der Gehäuserippen 35,36 dem jeweiligen Bewegungsweg des Bestätigungskopfes 22,29 aus dem Gehäuse heraus entspricht, so daß der jeweilige Betätigungskopf 22,29 die Gehäuserippen 35,36 nicht überragen kann. Damit ist auch bei einem Ablegen des Gerätes oder bei einer evtl. unbeabsichtigten Berührung ein Auslösen der Drehsicherung in die Freigabestellung oder die Sperrstellung vermeidbar. Durch die entsprechende farbliche Kennzeichnung der Betätigungsköpfe 22,29 ist dabei gewährleistet, daß ohne Betätigung der Drehsicherung 100 immer leicht festgestellt werden kann, in welcher Betriebsstellung sich diese befindet, so daß sich ein erhöhter Bedienungskomfort ergibt.

Es ist dabei möglich, die Drehsicherung 100 auch anders, als voranstehend beschrieben, zu konzipieren. So ist es möglich, die Winkel zwischen der Längsachse L1 und der Längsachse L2 größer oder kleiner als 90° zu konzipieren, wobei dann lediglich eine Anpassung der Umgreifeinziehung 25a zu erfolgen hat. Auch diese kann eine andersartige geometrische Ausformung aufweisen. So ist es beispielsweise denkbar, daß diese zwei keilförmige Abschnitte oder auch nur einen durchgehenden keilförmigen Abschnitt aufweist, wobei lediglich sichergestellt werden muß, daß in einer Stellung des Verriegelungsbolzens 25 der Blockierbolzen 16 durch die Umgreifeinziehung 25a soweit freigegeben wird, daß eine freie Bewegbarkeit des Verriegelungsbolzens 25 gewährleistet ist, während in einer zweiten Stellung des Verriegelungsbolzens 25 dieser in eine Einrastausnehmung des Blockierbolzens 16 so eingreift, daß dieser gegen eine Verschiebung in Längsrichtung gesichert ist, wobei diese blockierte Stellung die Stellung sein soll, in der das Einsteckteil 20 in die Bohrung 15 eingreift. Dabei ist es beispeilsweise möglich, die Einrastausnehmung 118 als tangentiale Einziehung auszubilden wobei dann sichergestellt werden muß, daß sich der Blockier bolzen 16 nicht um seine Längsachse dreht, so daß immer ein Eingreifen des Verriegelungsbolzens 25 in die Einrastausnehmung des Blockierbolzens 16 möglich ist. Ebenso muß natürlich der Verriegelungsbolzen 25 gegen eine Verdrehung gesichert sein.

## Patentansprüche

1. Drehsicherung (100) eines drehbar gelagerten Teiles (10), nämlich eines Schneidwerkzeuges eines Arbeitsgerätes (12), insbesondere eines Freischneidegerätes, mit mindestens einem dem drehbaren Teil (10) zugeordneten Sicherungselement (14), das mit mindestens einem Blockierbolzen (16) zusammenwirkt, wobei der Blockierbolzen (16) am Arbeitsgerät (12) angeordnet und aus einer das drehbar gelagerte Teil (10) freigebenden Freigabestellung in eine das drehbar gelagerte Teil (10) gegen eine Drehung um seine Drehachse (11) sperrende Sperrstellung verstellbar ist, und der federbelastete Blockierbolzen (16) axial verschiebbar am Arbeitsgerät (12) gelagert und in der Sperrstellung in eine Sperrbohrung (15) eines Sicherungselementes (14) eingreifend an einem Widerlager (125) des Arbeitsgerätes (12) abgestützt ist,
dadurch gekennzeichnet,
daß das Widerlager (125) als ein unter einem Winkel zur Blockierbolzenlängsachse (L1) des Blockierbolzens (16) verschiebbar angeordneter und in eine am Blockierbolzen (16) ausgebildete Einrastausnehmung (118) eingreifbarer Verriegelungsbolzen (25) ausgebildet ist, daß die Einrastausnehmung (118) als umlaufende und einen rechteckigen Querschnitt aufweisende Ringnut (18) am Blockierbolzen (16) ausgebildet ist,
daß der Verriegelungsbolzen (25) eine Umgreifeinziehung (25a) für ein einrastendes Umgreifen des Blockierbolzens (16) aufweist, daß die Umgreifeinziehung (25a) als tangentiale Einziehung mit zwei Bereichen mit jeweils einem teilzylindrischen Querschnitt ausgebildet ist, und daß an dem einen Ende (21) des Blockierbolzens (16) ein einen gegenüber dem Querschnitt des Blockierbolzens (16) größeren Querschnitt aufweisender Betätigungskopf (22) über eine Druckfeder (32) gegen das Arbeitsgerät (12) so abgestützt ist, daß der Blockierbolzen (16) unter Einwirkung der Federkraft der Feder (32) in seiner Freigabestellung gehalten wird und gegen die Federkraft der Feder (32) in seine Sperrstellung verschiebbar ist.

2. Drehsicherung nach Anspruch 1,
dadurch gekennzeichnet,
daß die zwei Bereiche der Umgreifeinziehung (25a) mit dem teilzylindrischen Querschnitt so ausgebildet sind, daß der Durchmesser (a) des einen Teilzylinders dem Durchmesser (A) des Blockierbolzens (16) und der Durchmesser (b) des zweiten Teilzylinders dem Durchmesser (B) des Blockierbolzens (16) im Bereich einer Ringnut (18) am Blockierbolzen (16) entspricht.

3. Drehsicherung nach Anspruch 1 oder 2,
dadurch gekennzeichnet,
daß der Blockierbolzen (16) als runder Stift mit einem über die Längsachse (L1) annähernd konstanten Querschnitt mit Ausnahme der Ringnut (18) ausgebildet ist, an dessen anderen Ende (19) ein Einsteckteil (20) zum Einstecken in eine als Sperrbohrung ausgebildete Bohrung (15) im als Sicherungselement (14) ausgebildeten Schneidwerkzeugauflageteil (13) vorgesehen ist.

4. Drehsicherung nach einem der Ansprüche 1 bis 3,
dadurch gekennzeichnet,
daß der Blockierbolzen (16) in einer Durchgangsbohrung (17) verschiebbar geführt ist, wobei die Durchgangsbohrung (17) einen verbreiterten Eingangsabschnitt (17a) aufweist, in dem die den Blockierbolzen (16) umschließende und sich im verbreiterten Eingangsabschnitt (17a) einerseits und an dem Betätigungskopf (22) des Blockierbolzens (16) andererseits abstützende Feder (32) angeordnet ist.

5. Drehsicherung nach einem der Ansprüche 1 bis 4,
dadurch gekennzeichnet,
daß der Verriegelungsbolzen (25) über eine Feder (28) gegen das Arbeitsgerät (12) so abgestützt ist, daß der Verriegelungsbolzen (25) unter Einwirkung der Feder (28) in seiner den Blockierbolzen (16) verriegelnden Stellung, bei der die Umgreifungseinziehung (25a) in die Einrastausnehmung (118) eingreift, gehalten wird und gegen die Federkraft der Feder (28) in eine den Blockierbolzen (16) freigebende Stellung verschiebbar ist.

6. Drehsicherung nach Anspruch 5,
dadurch gekennzeichnet,
daß die den Verriegelungsbolzen (25) abstützende Feder (28) eine Druckfeder ist.

7. Drehsicherung nach Anspruch 6,
dadurch gekennzeichnet,
daß der Verriegelungsbolzen (25) in einer Sacklochbohrung (26) verschiebbar geführt ist, deren einendseitiges Bohrungsendstück (26a) einen verringerten Qeurschnitt unter Ausbildung eines stufenartigen Absatzes (26b) aufweist, wobei der Verriegelungsbolzen (25) an seinem aus dem Gehäuse (12) herauskragenden Ende (27a) einen Betätigungskopf (29) und an seinem gegenüberliegenden, in der Sacklochöffnung (26) befindlichen Ende (27b) einen Absatz (27c) und einen in das Bohrungsendstück (26a) hineinkragenden Schaftfortsatz (27) mit halbkreisartiger Fläche zur Drehsicherung als verjüngten Endschaft aufweist, wobei sich der Verriegelungsbolzen (25) mit dem in der Sacklochbohrung (26) befindlichen Schaftfortsatz (27) über die in dem Bohrungsendstück (26a) angeordnete Druckfeder (28) abstützt.

8. Drehsicherung nach Anspruch 7,
dadurch gekennzeichnet,
daß der Betätigungskopf (29) des Verriegelungsbolzens (25) eine außen umlaufende, einen kreisförmigen Querschnitt aufweisende Ringnut (30) aufweist, in der ein einen verbreiterten Eingangsabschnitt (26c) der Sacklochbohrung (26) abdichtender O-Ring als Dichtung (31) angeordnet ist.

9. Drehsicherung nach einem der Ansprüche 1 bis 8,
dadurch gekennzeichnet,
daß ein Betätigungskopf (24) eine außen umlaufende Ringnut (33) aufweist, in der ein den verbreiterten Eingangsabschnitt (17a) der Durchgangsbohrung (17) abdichtender O-Ring als Dichtung (34) angeordnet ist.

10. Drehsicherung nach einem der Ansprüche 1 bis 9,
dadurch gekennzeichnet,
daß am Arbeitsgerat (12) im Bereich der Durchgangsdurchbohrung (17) und/oder im Bereich der Sacklochbohrung (26) Gehäuserippen (35,36) mit einer einem Bewegungsweg des Betätigungskopfes (22) des Blockierbolzens (16) bzw. des Betätigungskopfes (29) des Verriegelungsbolzens (25) entsprechenden Höhe (h) angeordnet sind.

11. Drehsicherung nach einem der Ansprüche 1 bis 10,
dadurch gekennzeichnet,
daß der Winkel zwischen der Blockierbolzenlängsachse (L1) des Blockierbolzens (16) und der Verriegelungsbolzenlängsachse (L2) des Verriegelungsbolzens (25) etwa 90° beträgt.

12. Drehsicherung nach einem der Ansprüche 1 bis 11,
dadurch gekennzeichnet,
daß das Sicherungselement (14) als ein auf dem drehbaren Schneidwerkzeug (10) fest angeordnete Schneidwerkzeugauflageteil (13) mit einer Sackloch- oder Durchgangsbohrung (15) für einen Eingriff durch den Blockierbolzen (16) ausgebildet ist.

## Claims

1. Rotation-inhibiting safety device (100) of a rotatably supported component (10), viz. of a cutting tool of an implement (12), more particularly a clearing cutter, having at least one safetying element (14) allocated to the rotatable component (10), which interacts with at least one inhibit bolt (16), in which the inhibit bolt (16) is mounted on the implement (12) and can be adjusted from a release position releasing the rotatably supported component (10) into an inhibiting position which stops the rotatably supported component (10) from executing a rotation about the axis of rotation (11) and in which the spring-loaded inhibit bolt (16) is disposed so as to be axially displaceable on the implement (12) and, in the inhibiting position, is supported so as to engage into an inhibit bore (15) of a safetying element (14) on a thrust block (125) of the implement (12),
**characterized in that**
the thrust block (125) is constructed in the form of a locking bolt (25) displaceable at an angle to the longitudinal axis (L1) of the inhibit bolt (16) and engageable into an engagement recess (118) formed on the inhibit bolt (16), in that the engagement recess (118) is constructed in the form of a circumferential annular groove ( 18) possessing a rectangular cross-section on the inhibit bolt (16), in that the locking bolt (25) possesses an embracing recess (25a) for engagingly embracing the inhibit bolt (16), in that the embracing recess (25a) is constructed in the form of a tangential recess having two areas possessing in each case a pitch-cylindrical cross-section, and in that, on the one end (21) of the inhibit bolt (16), an actuating head (22) possessing a larger cross-section compared with the cross-section of the inhibit bolt (16) is supported against the implement (12) by means of a compressive spring (32) in such a way that the inhibit bolt (16), due to the action of the spring (32), is retained in its release position and is displaceable against the spring force of the spring (32) into its inhibiting position.

2. Rotation-inhibiting safety device according to Claim 1,
**characterized in that**
the two areas of the embracing recess (25a) possessing the pitch-cylindrical cross-section are constructed in such a way that the diameter (a) of one of the pitch cylinders corresponds to the diameter (A) of the inhibit bolt (16) and the diameter (b) of the second pitch cylinder corresponds to the diameter (B) of the inhibit bolt (16) within the area of an annular groove in the inhibit bolt (16).

3. Rotation-inhibiting safety device according to Claim 1 or 2,
**characterized in that**
the inhibit bolt (16) is constructed in the form of a round pin possessing an approximately uniform cross-section across the longitudinal axis (L1) with the exception of the annular groove ( 18), on whose other end (19), an inserting member (20) is provided for introduction into a bore (15) constructed in the form of an inhibit bore in the cutting tool bearing portion (13) formed so as to constitute a safetying element (14).

4. Rotation-inhibiting safety device according to any of Claims 1 to 3,
**characterized in that**
the inhibit bolt (16) is displaceably guided in a through bore (17), the through bore (17) possessing a widened entry section (17a), in which the spring (32) is disposed which surrounds the inhibit bolt (16) and is supported in the widened entry section (17a) on the one hand and on the actuating head (22) of the inhibit bolt (16) on the other.

5. Rotation-inhibiting safety device according to any of Claims 1 to 4,
**characterized in that**
the locking bolt (25) is supported by means of a spring (28) against the implement (12) in such a way that the locking bolt (25), by the action of the spring (28), is retained in its position locking the inhibit bolt (16) in which the embracing recess (25a) engages into the engagement recess (118) and is displaceable against the spring force of the spring (28) into a position which releases the inhibit bolt (16).

6. Rotation-inhibiting safety device according to Claim 5,
**characterized in that**
the spring (28) supporting the locking bolt (25) is a compression spring.

7. Rotation-inhibiting safety device according to Claim 6,
**characterized in that**
the locking bolt (25) is displaceably guided in a blindend bore (26), whose bore end piece (26a) at one end possesses a reduced cross-section while forming a step-like shoulder (26b) wherein the locking bolt (25), on its end which projects from the housing (12), is provided with an actuating head (29) and, on its oppositely located end (27b) situated in the blind-end bore opening (26), a shoulder (27c) and a shank extension (27) projecting into the bore end piece (26a) with a semicircular area serving as a rotation safetying means in the form of a tapered terminal shank, wherein the locking bolt (25) with the shank extension (27) located in the blind-end bore (26) is supported with the aid of the compression spring (28) disposed in the bore end piece (26a).

8. Rotation-inhibiting safety device according to Claim 7,
**characterized in that**
the actuating head (29) of the locking bolt (25) is provided with an external, circumferential annular groove (30) possessing a circular cross-section, in which a sealing ring in the form of a seal (31) is disposed in a widened entry section (26a) of the blind-end bore (26).

9. Rotation-inhibiting safety device according to any of Claims 1 to 8,
**characterized in that**
an actuating head (24) is provided with an external, circumferential annular groove (33), wherein a sealing ring is disposed in the form of a seal (34) sealing the widened entry section (17a) of the through bore (17).

10. Rotation-inhibiting safety device according to any of Claims 1 to 9,
**characterized in that,**
on the implement (12), within the area of the through bore (17) and/or within the area of the blind-end bore (26), housing ribs (35,36) having a height (h) corresponding to a path of travel of the actuating head (22) of the inhibit bolt (16) or of the actuating head (29) of the locking bolt (25).

11. Rotation-inhibiting safety device according to any of Claims 1 to 10,
**characterized in that**
the angle between the longitudinal axis (L1) of the inhibit bolt (16) and the longitudinal axis (L2) of the locking bolt (25) is approximately 90°.

12. Rotation-inhibiting safety device according to any of Claims 1 to 11,
**characterized in that**
the safetying element (14) is constructed in the form of a cutting tool bearing portion (13) rigidly mounted on the rotatable cutting tool (10) and having a blind-end bore or a through bore (15) for an engagement through the inhibit bolt (16).

## Revendications

1. Dispositif d'arrêt rotatif (100) d'une pièce positionnée en étant rotative (10), à savoir d'un outil de découpe d'un appareil de travail (12), en particulier d'un outil de découpage non guidé, avec au moins un élément d'arrêt (14), affecté à la pièce rotative (10), qui coopère avec au moins un boulon de blocage (16), le boulon de blocage (16) étant placé sur l'appareil de travail (12) et étant réglable à partir d'une position de déblocage qui débloque la partie positionnée en étant rotative (10) dans une position de blocage qui bloque la pièce positionnée en étant rotative (10) contre une rotation autour de son axe rotatif (11) et le boulon de blocage chargé par ressort (16) étant positionné en étant mobile axialement sur l'appareil de travail (12) et s'appuyant sur une butée (125) de l'appareil de travail (12) en s'engrenant dans la position de blocage dans une forure de blocage (15) d'un élément d'arrêt (14),
**caractérisé en ce**
que la butée (125) est configurée comme un boulon de verrouillage (25) placé en étant mobile en formant un angle avec l'axe longitudinal du boulon de blocage (L1) du boulon de blocage (16) et pouvant s'engrener dans un creux d'enclenchement (118) formé sur le boulon de blocage (16), que le creux d'enclenchement (118) est configuré comme une rainure périphérique ( 18) sur le boulon de blocage (16) qui présente une section rectangulaire,
que le boulon de verrouillage (25) présente une gorge enveloppante (25a) pour l'enveloppement à enclenchement du boulon de blocage (16), que la gorge enveloppante (25a) est configurée comme une gorge tangentielle avec deux zones avec chacune une section partiellement cylindrique et qu'un bouton d'actionnement (22) qui présente une section plus grande que la section du boulon de blocage (16), qui se trouve à l'une des extrémités (21) du boulon de blocage (16), s'appuie par un ressort de pression (32) contre l'appareil de travail (12) de telle manière que le boulon de blocage (16) est maintenu par l'effet de l'élasticité du ressort (32) dans sa position de déblocage et qu'il est translatable dans sa position de blocage contre l'élasticité du ressort (32).

2. Dispositif d'arrêt rotatif selon la revendication 1,
**caractérisé en ce**
que les deux zones de la gorge d'enveloppement (25a) avec la section partiellement cylindrique sont formées de telle manière que le diamètre (a) de l'un des cylindres partiels correspond au diamètre (A) du boulon de blocage (16) et que le diamètre (b) du second cylindre partiel correspond au diamètre (B) du boulon de blocage (16) dans la zone d'une rainure périphérique (18) sur le boulon de blocage (16).

3. Dispositif d'arrêt rotatif selon la revendication 1 ou 2,
**caractérisé en ce**
que le boulon de blocage (16) est configuré comme une cheville ronde avec une section approximativement constante sur l'axe longitudinal (L1), à l'exception de la rainure périphérique (18), à l'autre extrémité duquel (19) il est prévu une pièce à emboîter (20) à emboîter dans une forure (15) configurée comme forure de blocage dans la pièce d'appui de l'outil de découpe (13) configurée comme élément d'arrêt (14).

4. Dispositif d'arrêt selon l'une des revendications 1 à 3,
**caractérisé en ce**
que le boulon de blocage (16) est guidé en étant mobile dans une forure de passage (17), la forure de passage (17) présentant une section d'entrée (17a) élargie dans laquelle le ressort (32) qui entoure le boulon de blocage (16) et qui s'appuie dans la zone d'entrée élargie (17a) d'une part et sur le bouton d'actionnement (22) du boulon de blocage (16) d'autre part est placé.

5. Dispositif d'arrêt selon l'une des revendications 1 à 4,
**caractérisé en ce**
que le boulon de verrouillage (25) s'appuie par un ressort (28) contre l'appareil de travail (12) de telle manière que le boulon de verrouillage (25) est maintenu sous l'effet du ressort (28) dans sa position qui bloque le boulon de blocage (16), dans laquelle la gorge d'envelopement (25a) s'engrène dans le creux d'enclenchement (118) et est mobile contre l'élasticité du ressort (28) dans une position qui débloque le boulon de blocage (16).

6. Dispositif d'arrêt selon la revendication 5,
**caractérisé en ce**
que le ressort (28) qui soutient le boulon de verrouillage (25) est un ressort de pression.

7. Dispositif d'arrêt selon la revendication 6,
**caractérisé en ce**
que le boulon de blocage (25) est guidé en étant mobile dans un trou borgne (26) dont la pièce d'extrémité de trou à l'une des extrémités (26a) présente une section diminuée en formant un talon du type gradin (26b), le boulon de verrouillage (25) présentant à son extrémité (27a) qui fait saillie du boîtier (12) un bouton d'actionnement (29) et à son extrémité (27b) opposée qui se trouve dans le trou borgne (26) un talon (27c) et un prolongement de tige (27) qui fait saillie dans la pièce d'extrémité de trou (26a) avec une surface du type demi-cercle pour l'arrêt de la rotation comme tige d'extrémité effilée, le boulon de verrouillage (25) avec le prolongement de tige (27) se trouvant dans le trou borgne (26) s'appuyant par le ressort de pression (28) placé dans la pièce d'extrémité de trou (26a).

8. Dispositif d'arrêt selon la revendication 7,
**caractérisé en ce**
que le bouton d'actionnement (29) du boulon de blocage (25) présente une rainure périphérique extérieure (30) qui présente une section circulaire, rainure dans laquelle un anneau torique qui étanche une zone d'entrée élargie (26c) du trou borgne (26) est placé comme étanchéité (31).

9. Dispositif d'arrêt selon l'une des revendications 1 à 8,
**caractérisé en ce**
qu'un bouton d'actionnement (24) présente une rainure périphérique (33) extérieure dans laquelle est placé un anneau torique qui étanche la zone d'entrée élargie (17a) de la forure de passage (17a) comme étanchéité (34).

10. Dispositif d'arrêt selon l'une des revendications 1 à 9,
**caractérisé en ce**
que des nervures de boîtier (35, 36) sont placées sur l'appareil de travail (12) dans la zone de la forure de passage (17) et/ou dans la zone du trou borgne (26) qui sont d'une hauteur (h) qui correspond à un trajet de déplacement du bouton d'actionnement (22) du boulon de blocage (16) ou du bouton d'actionnement (29) du boulon de verrouillage (25).

11. Dispositif d'arrêt selon l'une des revendications 1 à 10,
**caractérisé en ce**
que l'angle entre l'axe longitudinal du boulon de blocage (L1) du boulon de blocage (16) et l'axe longitudinal du boulon de verrouillage (L2) du boulon de verrouillage (25) est d'environ 90°.

12. Dispositif d'arrêt selon l'une des revendications 1 à 11,
**caractérisé en ce**
que l'élément d'arrêt (14) est configuré comme une pièce d'appui pour l'outil de découpe (13) placée de manière fixe sur l'outil de découpe rotatif (10) avec un trou borgne ou un trou de passage (15) pour être traversé par le boulon de blocage (16).
